# EUROPEAN PATENT SPECIFICATION

(11) **EP 4 401 608 B1**
(45) Date of publication and mention of the grant of the patent: **16.07.2025**
(21) Application number: 22793477.5
(22) Date of filing: 16.09.2022
(51) Int. Cl.: A47J 31/42, A47J 42/50

(54) **HOPPER FOR FEEDING DOSES OF BEANS, CORRESPONDING MACHINE AND CORRESPONDING METHOD FOR PREPARING BEVERAGES**
TRICHTER ZUR ZUFÜHRUNG VON BOHNENDOSEN, ENTSPRECHENDE MASCHINE UND ENTSPRECHENDES VERFAHREN ZUR HERSTELLUNG VON GETRÄNKEN
TRÉMIE D'ALIMENTATION DE DOSES DE GRAINS, MACHINE CORRESPONDANTE ET PROCÉDÉ CORRESPONDANT DE PRÉPARATION DE BOISSONS

(30) Priority: 17.09.2021 IT 202100024011
(43) Date of publication of application: 24.07.2024
(73) Proprietor: De' Longhi Appliances S.r.l. Con Unico Socio, 31100 Treviso (IT)
(72) Inventor: ROSETTA, Simone, 31100 Treviso (IT); ZARATIN, Enrico, 31100 Treviso (IT); FACCO, Marco, 31100 Treviso (IT)
(74) Representative: Petraz, Gilberto Luigi
(86) International application number: PCT/IT2022/050252
(87) International publication number: WO 2023/042237

(56) References cited:
- EP-A2- 2 364 624
- WO-A1-2020/105011
- WO-A2-2010/033023
- FR-A1- 2 755 431

## Description

### FIELD OF THE INVENTION

The present invention concerns a hopper for feeding predefined doses of beans, in particular but not only coffee beans. The hopper can be removably connected to a machine for preparing coffee beverages, in particular to a grinding device of the machine. The invention also concerns a method for preparing a coffee beverage.

### BACKGROUND OF THE INVENTION

Machines for preparing coffee beverages are known, with a brewing chamber into which a certain quantity of product is fed on each occasion, with which a hopper can be associated, suitable to contain either coffee beans to be fed to a grinding device, or already ground coffee powder.

Machines with removable type hoppers are increasingly common, to allow consumers to be able to change the type of coffee beans to be used. In these cases, known hoppers comprise a container provided with an outlet aperture for the coffee beans and a closing element with closing means suitable to close the outlet aperture at least when the hopper is disconnected from the machine.

In these known solutions, when the hopper is removed from the machine, both a certain quantity of coffee powder and also a quantity of coffee beans remain in the grinding device.

Consequently, changing the hopper or replacing the type of beans to be used, in order to avoid contamination between different types of beans, or more simply to avoid spillage of the product, it is necessary to empty the grinding device, manually, or by preparing a beverage with the remaining type of beans.

Another disadvantage occurs if the machine is inactive, when the residual powder and/or beans can lose their properties because the grinding device is not watertight.

Another disadvantage is that the doses of coffee beans supplied to the grinding device do not exactly correspond to the quantity of product powder required to deliver the beverage.

Solutions are known which provide dosing devices positioned between the hopper and the grinding device, the function of which is to selectively transport a dose of coffee beans from the hopper to the grinding device. Even in these cases the problem of residues and the consequences indicated above are not eliminated.

EP2364624A describes an apparatus for preparing beverages comprising a container for the beans internally provided with rotatable transport means comprising a bottom wall and lateral walls which extend radially and define respective sectors open at the upper part. The function of the transport means of EP'624 is substantially to rotate the coffee beans to provide them with centrifugal acceleration in order to facilitate their exit, through a laterally offset aperture, to a measuring chamber with a volume that defines the quantity of coffee beans to be used for preparing a beverage. One disadvantage of this solution is that, since the total dose of beans for preparing a beverage corresponds to the quantity of beans that can be contained in the measuring chamber, it is not possible to modify this dose as desired.

FR2755431 describes a device that can be driven manually to deliver a dose of product in granular or powder form from a container, which comprises a fixed part having an inlet aperture, a mobile part disposed in a space defined by the fixed part and a closing base plate connected to the fixed part and provided with an outlet aperture. The mobile part can rotate with respect to the fixed part by an angle of 90° in one sense and the other, so as to displace a discharge chamber of the mobile part from a first position aligned with the inlet aperture to a second position aligned with the outlet aperture. One disadvantage of this solution is that it does not allow to deliver a plurality of doses successively and quickly, since after the delivery of a first dose it is necessary to bring the mobile part back. This aspect makes it unsuitable to be used in association with a machine for preparing beverages.

There is therefore a need to perfect a hopper for feeding predefined doses of beans which can overcome at least one of the disadvantages of the state of the art.

To do this, it is necessary to solve the technical problem of providing a hopper that can be selectively connected and disconnected from a machine and is able to supply on each occasion a desired quantity of beans suitable to prepare a beverage, avoiding residues in the grinding device.

One purpose of the present invention is in particular to provide a hopper suitable to selectively supply predefined doses of beans at exit, until the desired quantity is reached.

Another purpose of the invention is to provide a hopper and a machine for preparing beverages which allow to change the type of beans to be used, avoiding contamination between the previous and subsequent product.

Another purpose of the present invention is to provide a machine for preparing beverages suitable to feed a correct quantity of beans according to the type of beverage selected.

Still another purpose of the present invention is to provide a machine which is simple to use for a user.

Another purpose of the present invention is to provide a method for preparing a beverage which allows the grinding device to be kept substantially empty between two successive beverage preparations.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the above technical problem in a new and original way, also obtaining considerable advantages compared to the state of the prior art, a removable type hopper for containing coffee beans comprises:
- a container suitable to contain the beans and provided with a lower aperture;
- a closing base plate associated with the lower aperture and disposed rotatable with respect to the container in order to selectively open and close an outlet aperture of a dosing device which is disposed in the container;
- a volumetric type dosing device disposed inside the container, provided with a plurality of sectors separated from each other, each suitable to contain a defined dose of beans, which are rotatable with respect to an axis of rotation, wherein the dosing device is able to be driven in order to rotate the sectors and selectively take one of them in correspondence with the outlet aperture.

The dosing device comprises an upper plate provided with an inlet aperture for the beans, a lower plate provided with an outlet aperture for the beans and a transporter member disposed rotatable between the upper and lower plates, the transporter member being configured to selectively transport a dose of beans from the inlet aperture to the outlet aperture.

The transporter member comprises at least two blades rotatable around the axis of rotation which extend radially and, together with the two plates, define respective angular sectors that are rotatable angularly offset with respect to each other.

In accordance with one aspect of the present invention, the sectors have a fixed volume and are configured to contain a dose of coffee beans corresponding to their volume.

During use, the inlet and outlet apertures of the dosing device are disposed angularly offset from each other by an angle larger than the size of the sectors, and they are preferably disposed in fixed positions diametrically opposite each other.

The size of the inlet and outlet apertures and the number/size of the blades are such that in each position of the transporter member around the axis of rotation the two apertures are each placed in communication with a different sector, preventing the direct transit of the beans between the inlet and outlet.

Preferably, the transporter member comprises at least three blades; however, their number can be even higher, as a function of the quantity of beans that each dose has to contain.

According to some embodiments, the outlet aperture is preferably disposed misaligned with respect to the axis of rotation, and extends at least partly in a lateral wall of the lower plate, on which there can be provided a concave-convex portion in correspondence with the outlet aperture to facilitate the passage of the beans, such portion having a concavity on the internal side and a mating convexity on the external side.

The hopper can also comprise a conveyor member rotatable around the axis of rotation and configured to cooperate with the upper plate and convey the coffee beans toward the inlet aperture in order to speed up the filling of the sectors.

Preferably, the conveyor member and the transporter member are keyed on a same drive pin which is passing through respective holes of the two plates and of the closing base plate and is provided with connection members to connect, during use, to a rotation shaft of a motor.

According to some embodiments, the blades of at least one of either the transporter member or the conveyor member comprise at least one flexible portion made of rubber, silicone, or other flexible, deformable or pliable elastic material, so as to move the beans without breaking them. The flexible portion can flex under the action of a bean, thus reducing friction and interference and the torque required for the rotation of the transporter member and/or the conveyor member. Consequently, there is less stress on the structure, the operating noise is reduced, and it is possible to use a less powerful gearmotor to drive the transporter member and/or the conveyor member.

Some embodiments described here also concern a machine for preparing beverages comprising a removable hopper according to the invention, a grinding device for grinding the coffee beans and a brewing unit.

The machine comprises a containing body provided with a compartment suitable to house the hopper, which is placed in communication with the grinding device.

The compartment comprises coupling members suitable to cooperate with coupling members of the container in order to selectively clamp the hopper, and clamping members suitable to cooperate with the closing base plate in order to clamp it in a fixed position while the container is rotated so as to open the passage aperture for the beans.

According to one aspect of the invention, the machine also comprises drive means, for example comprising a drive shaft connected to an electric motor, which are suitable to engage with the connection members of the drive pin and make the transporter member and, if present, also the conveyor member rotate.

According to another aspect of the invention, the housing compartment comprises a covering door suitable to selectively close it when no hopper is inserted, so as to provide both protection against dirt that could enter the housing compartment and also protection for the user, preventing him/her from touching the grinders.

According to one aspect of the invention, the door comprises engagement members suitable to engage with corresponding engagement members present on the container of the hopper, whereby a rotation of the latter in the housing compartment entails a simultaneous movement of the door so as to open a passage for the transit of the beans toward the grinding device.

According to some embodiments, elastic interference means can be associated with the door which are suitable to keep the door in an open or closed position, preventing any accidental movement thereof.

According to one possible embodiment, the elastic interference means can be disposed in the housing compartment in such a way as to axially cooperate with interference members provided on the door, in order to keep both the door and also the container engaged therewith in a stable position, preventing any accidental movement thereof.

Some embodiments described here also concern a method for preparing a coffee beverage which provides to:
- insert a removable hopper comprising a container, a dosing device inside the container and a closing base plate into a compartment of a machine for preparing coffee beverages;
- rotate the container to clamp the hopper in the compartment and align a passage aperture of the base plate with the outlet aperture of the dosing device;
- receive a command for the preparation of a beverage and determine a quantity of coffee beans necessary and sufficient to prepare the selected beverage;
- drive a transporter member of the dosing device in order to rotate a plurality of sectors of the latter, which have a pre-defined volume and each of which is suitable to contain a defined dose of beans, around an axis of rotation and selectively take one of the sectors in correspondence with the outlet aperture until the determined quantity of beans is supplied to a grinding device;
- drive the grinding device to completely grind the quantity of beans and obtain a powder to be fed to a brewing unit;
- subject the coffee powder to brewing and deliver the beverage.

According to one aspect of the invention, once the number of doses necessary and sufficient to obtain the desired quantity for the selected beverage has been supplied, the method provides to stop the dosing device when the sector containing the last dose of coffee beans required has been emptied.

According to some embodiments, the amount of rotation and the stop position of the sectors are managed by a control unit on the basis of data received from a detection device disposed in the housing compartment and cooperating with identifying elements provided on the dosing device and associated with the sectors to determine their respective position.

According to some embodiments, the method provides to rotate the sectors in the opposite direction to the direction in which the container is rotated in order to clamp the hopper in the machine. In this way, when the container is rotated in the unclamping direction to remove the hopper, the sector adjacent to the last one just emptied is moved away from the outlet aperture, so as to prevent accidental escapes of the beans which could remain stuck between the outlet aperture provided on the container and a passage aperture provided on the base plate, making the closure ineffective.

According to one aspect of the invention, the rotation of the container in the housing compartment entails a simultaneous movement of a door covering the housing compartment to selectively open and close a passage channel for the beans toward the grinding device.

According to another aspect of the invention, the method provides to verify whether the coffee powder fed to the brewing unit corresponds to the quantity required for the selected beverage and possibly correct the number of rotation steps of the sectors in the subsequent preparation of a beverage.

According to one aspect of the invention, in order to carry out the verification, the method provides to compact the coffee powder fed into the brewing unit with a defined pressure and measure the height of the coffee mound obtained by comparing it with a pre-stored expected value to verify whether the quantity of coffee powder fed to the brewing unit corresponds to the quantity required for the selected beverage.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic view of a machine for preparing coffee beverages according to some embodiments described here;
- fig. 2 is a partial schematic view of a detail of fig. 1;
- fig. 3 is an exploded schematic view of a hopper according to the present invention;

- figs. 3a-3f show respective components of the hopper of fig. 3 according to different orientations, in order to better visualize some details;
- fig. 4a is a three-dimensional view of a variant of a transporter member according to the invention;
- fig. 4b is a schematic view of the transporter member of fig. 4a in an operating condition;
- fig. 5 is a section three-dimensional view of some components of the hopper of fig. 3 in an assembled condition;
- figs. 6 and 7 show, according to a schematic top view, the reciprocal positions of the closing base plate and of the dosing device of the hopper of fig. 5 in different operating conditions with respect to a housing compartment of the machine of fig. 1;
- fig. 8 is a bottom view of the hopper according to the invention in an assembled condition with the aperture for the passage of the beans in an open condition;
- fig. 9 is a three-dimensional view of the housing compartment of the machine of fig. 1 sectioned along a plane offset with respect to a median plane;
- fig. 10 is a three-dimensional view of the housing compartment of the machine of fig. 1 sectioned on a median plane and facing in the opposite direction with respect to the section of fig. 9 with the interference means in a first operating position;
- fig. 10a is a detailed view of a part of fig. 10 with the interference means in a second operating position;
- fig. 11 is a schematic bottom view of a closing door in accordance with a first embodiment;
- fig. 12 is a schematic top view of a closing door in accordance with a second embodiment;
- fig. 13 shows a section view of a hopper and a housing compartment of the machine according to the present invention in a non-connected condition;
- fig. 14 shows a section view of the hopper and the housing compartment of fig. 13 in a connected condition.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications, as long as the resulting embodiment is encompassed by the appended claims.

### DESCRIPTION OF SOME EMBODIMENTS OF THE PRESENT INVENTION

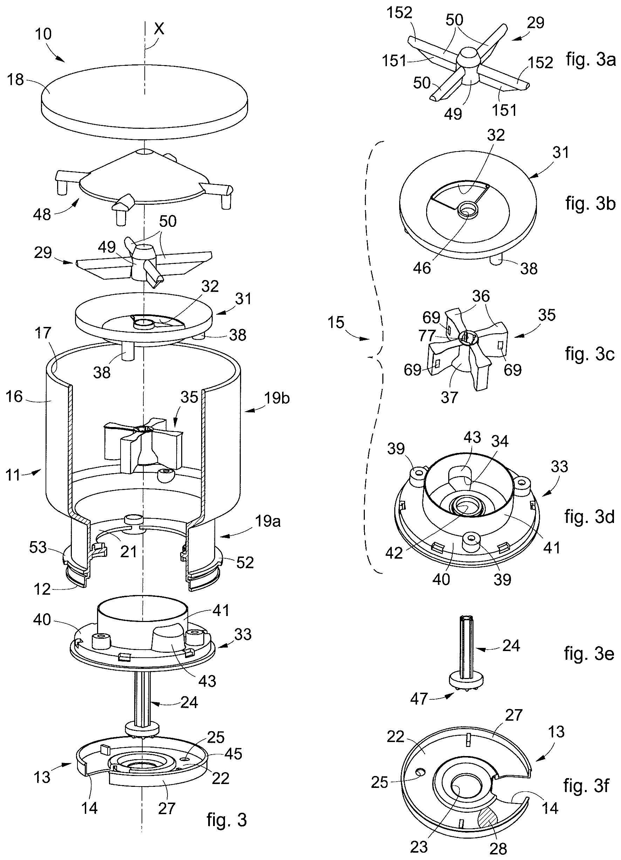

With reference to the attached drawings, a hopper 10 according to the invention is described, of the removable type, suitable to supply predefined doses of beans (figs. 3-8).

By the term "beans" here and hereafter in the description we mean coffee beans, in particular; however, other types of products are not excluded, for example seeds, cereals, grains of salt or pepper, or suchlike.

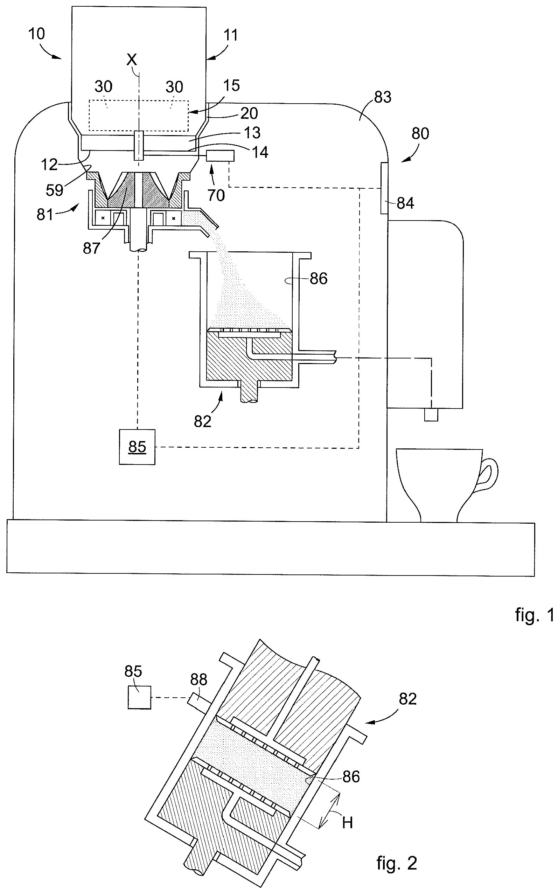

The present invention also concerns a machine 80 for preparing beverages (figs. 1-2, 9-12) provided with a housing compartment 20 in which the hopper 10 can be inserted and connected in a removable manner by means of respective reciprocal coupling and clamping members 51 which will be described below.

The hopper 10 comprises a container 11 for containing the beans provided with a lower aperture 12 and a closing base plate 13 which is disposed rotatable with respect to the container 11.

The lower aperture 12 is associated with a lower plate 33 which at least partly closes the container 11 and is provided with an outlet aperture 34 for the beans.

The base plate 13 can rotate with respect to the container 11 and with respect to the lower plate 33 integral therewith in order to selectively open and close the outlet aperture 34 of the beans.

According to one aspect of the invention, the hopper 10 comprises a dosing device 15 of the volumetric type disposed inside the container 11 and configured to selectively supply predefined doses of beans in correspondence with the outlet aperture 34.

The container 11 comprises a substantially cylindrical lateral wall 16 and it is provided with the lower aperture 12 and an upper aperture 17, which can be closed substantially hermetically by means of a lid 18.

The container 11 can comprise a lower portion 19a, inside which the device 15 is disposed, which has a smaller section than an upper portion 19b in which the beans are introduced and contained.

Inside the container 11 there can be provided a support flange 21 configured to cooperate with the dosing device 15 and keep it in a predefined position.

The base plate 13 comprises a bottom wall 22 in which a passage aperture 14 for the beans is made which, in the open condition, aligns with the outlet aperture 34 of the beans, while in the closed condition it is disposed offset with respect thereto and the outlet aperture 34 is closed by the bottom wall 22.

The bottom wall 22 can also be provided with a central hole 23 through which, during use, a drive pin 24 is disposed in order to drive the dosing device 15 from the outside of the container 11. The pin 24 is disposed inside the hopper 10 and is provided at the lower part with connection members 47 to connect, during use, to drive means 70.

The base plate 13 can also comprise a lateral wall 27 and the passage aperture 14 can be delimited by such lateral wall 27 or be made through the latter as well.

The base plate 13 can be provided with first clamping members, in this specific case a lateral hole 25, suitable to engage with respective second clamping members present in the compartment 20, in this specific case a peg 26, to clamp the base plate 13 and allow a rotation of the container 11 with respect thereto in order to open the passage aperture 14, as will be better described below.

The bottom wall 22 can comprise at least one portion 28 made or coated with rubber or other deformable material suitable to guarantee a sealed closure of the hopper 10 when the base plate 13 is in the closed condition.

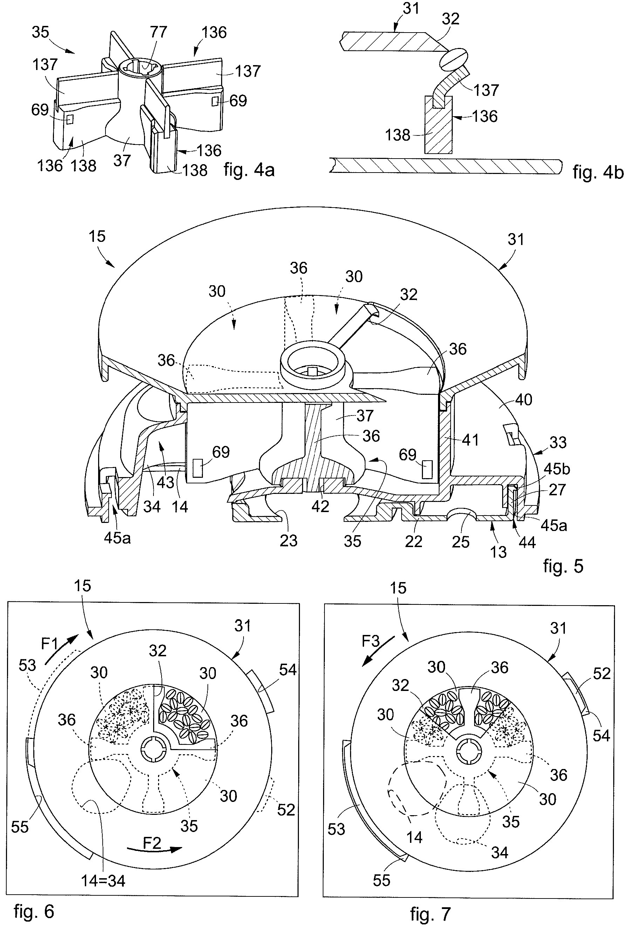

The dosing device 15 comprises a plurality of sectors 30 separated from each other and rotatable around an axis of rotation X, each suitable to contain a defined dose of beans (figs. 5-7).

Each of the sectors 30 has a defined and substantially closed volume, so that by knowing their size it is possible to know the quantity of beans contained in each one of them. The quantity of beans in a sector 30 defines a dose that has a substantially fixed volume which is preferably lower than the quantity required to prepare a beverage, so that as a function of the number of sectors 30 which are taken in correspondence with the outlet aperture 34 it is possible to vary the total quantity of coffee beans that has to be ground on each occasion to prepare a beverage.

With reference to figs. 3-8, the dosing device 15 comprises an upper plate 31 provided with an inlet aperture 32 and the lower plate 33 provided with the outlet aperture 34, which are distanced from each other and substantially parallel to each other, so as to delimit the sectors 30 at the upper and lower part.

The dosing device 15 also comprises a transporter member 35 disposed rotatable between the two plates 31 and 33, which is configured to selectively transport a dose of coffee beans contained in one of the sectors 30 from a zone aligned with the inlet aperture 32 toward the outlet aperture 34.

The transporter member 35 comprises at least two blades 36, 136 which define, together with the two plates 31, 33 and possibly with a lateral wall 41, the sectors 30. In this way, the sectors 30 are delimited substantially on all sides, except for when they are located in correspondence with the two inlet 32 and outlet 34 apertures, so that once a sector 30 has been filled with a certain quantity of beans in the zone disposed in correspondence with the inlet aperture 32, this quantity of beans is transported toward the outlet aperture 34 without it being possible to modify it.

In the example of figs. 3, 3c and 4, the transporter member 35 comprises four blades 36, 136; however, their number can be different as a function of the quantity of beans that each sector 30 has to contain and the overall dimensions of the hopper 10.

According to some embodiments, the blades 36 can be made of rigid plastic material.

According to a variant shown in figs. 4a and 4b, the blades 136 can comprise at least one flexible portion 137 made of rubber, silicone, or other flexible, deformable or pliable elastic material. Preferably, the flexible portion 137 faces, during use, toward the upper plate 31 and it can have a smaller thickness than a support portion 138 which can be made of rigid, non-flexible material so as to delimit the sectors 30. For example, the flexible portion 137 can be inserted into a seating of the support portion 138 or connected to it by means of same-shape coupling members, or even glued.

According to possible variants, not shown, it can also be provided that the entire blade 136 is made of flexible material, and possibly have a reduction in thickness toward the top.

When the blade 136 approaches the edge of the inlet aperture 32, if there are beans in correspondence with it, the flexible portion 137 can advantageously flex to allow the passage of the beans without breaking them (fig. 4b), considerably reducing the friction and interference between the components and the beans and therefore the torque required for the rotation of the transporter member 35.

The size of the inlet 33 and outlet 34 apertures and the number/size of the blades 36, 136 are such that in every position of the transporter member 35 around the axis of rotation X the two apertures 32, 34 are each placed in communication with a different sector 30, preventing the direct transit of the beans between the inlet and outlet.

The blades 36, 136 extend radially with respect to a central hub 37 provided with a shaped hole 77, for example grooved or in any case having a non-circular section, by means of which the transporter member 35 can be keyed on the drive pin 24.

The two plates 31, 33 are connected to each other by means of respective connection members 38, 39 which can be directly coupled to each other, or which define a common seating in which to insert pegs or other connection means (not shown), so that the respective inlet 32 and outlet 34 apertures are in fixed positions with respect to each other and angularly offset by an angle larger than the size of a sector 30. According to possible solutions, the two apertures 32, 34 can be diametrically opposite, offset by about 180°.

According to some embodiments, the lower plate 33 comprises a bottom wall 40 in which the outlet aperture 34 is made through.

According to some embodiments, the dosing device 15 comprises a substantially cylindrical lateral wall 41, which can be integrated into the lower plate 33 or be defined by an internal surface of the container 11.

According to possible embodiments described with reference to figs. 3, 3d and 5, the lateral wall 41 extends from one side of the bottom wall 40, distanced from the perimeter edge, enclosing the transporter member 35 and cooperating with the ends of its blades 36, 136 to define the sectors 30 and delimit their volume.

The outlet aperture 34 is preferably disposed misaligned with respect to the axis of rotation X and to a central hole 42, and it extends at least partly outside the lateral wall 41, on which a concave-convex portion 43 can be provided in correspondence with the outlet aperture 34 to facilitate the passage of the beans, the concave-convex portion 43 having the concave part facing toward the outlet aperture 34 and the convex part facing outward.

Preferably, the outlet aperture 34 has at least one portion disposed aligned underneath a sector 30 so that the beans can also fall by gravity.

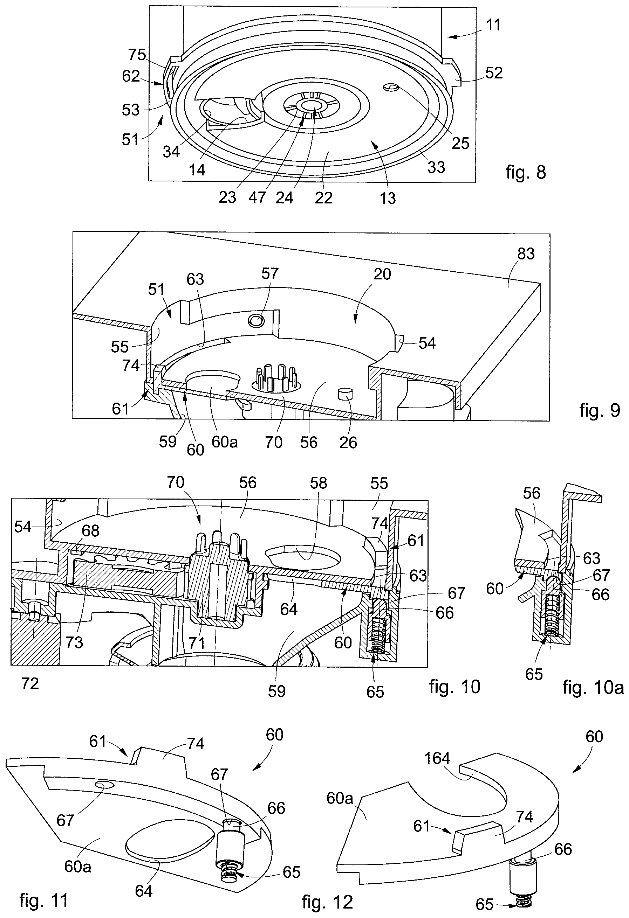

The dosing device 15, in particular the lower plate 33 and the base plate 13, can comprise respective coupling and guide means 44 configured to rotatably couple the two elements together, for example comprising an annular seating 45a disposed on the bottom wall 40 and suitable to house the lateral wall 27 of the base plate and engage with a protruding edge 45b thereof (figs. 5 and 12).

The hopper 10 can comprise a conveyor member 29 rotatable around the axis of rotation X and configured to cooperate with the upper plate 31 and convey the beans present in the upper portion 19b of the container 11 toward the inlet aperture 32. The conveyor member 29 can comprise a central sleeve 49 and a plurality of blades 50 which extend radially therefrom and have a shape substantially mating with that of the surface portion of the upper plate 31 with which they cooperate.

According to some embodiments, the blades 50 can comprise at least one flexible portion 151 made of rubber, silicone, or other flexible or deformable elastic material, so as to allow the movement of the beans without breaking them. The at least one flexible portion 151 is facing toward the upper plate 31 and cooperates with it. Similarly to what described above with reference to the blades 136 of the transporter member 35, the flexible portion 151 can be connected to a possibly rigid support portion 152, or the entire blade 50 can be made of flexible material. This embodiment, therefore, also contributes to generating less stress on the structure and reducing the operating noise, and it allows to use a less powerful gearmotor.

Preferably, the conveyor member 29 and the transporter member 35 are keyed on the same drive pin 24 through respective holes 42, 46, 77, 23 made through in the plates 31, 33, in the transporter member 35 and in the base plate 13.

Above the conveyor member 29 there can be provided a protection element 48 also called "finger guard".

According to some embodiments, described with reference to figs. 8 and 9, the hopper 10 and the housing compartment 20 are provided with respective coupling and clamping members 51 configured to cooperate with each other in such a way as to allow a reciprocal coupling in an axial direction along the axis of rotation X, at the same time preventing a reciprocal rotation around it.

These members 51 can comprise at least one fin 52 protruding radially from the lateral wall 16 of the container 11 and at least one mating cavity or groove 54 disposed in the housing compartment 20, suitable to create a bayonet coupling.

Preferably, two fins 52, 53 are provided, each suitable to be inserted in its own cavity or groove 54, 55, which are disposed angularly offset with respect to each other and advantageously have different sizes to allow a univocal positioning of the hopper 10.

A microswitch 57 or other device suitable to detect the presence of the fins 52, 53 can be disposed inside at least one cavity 54, 55. Once the fins 52, 53 have been inserted in the respective cavities 54, 55, the peg 26 (fig. 9) engages with the lateral hole 25 and the container 11 can be rotated so as to clamp it in the housing compartment 20, for example by an angle of about 40°-50°.

The rotation of the container 11 entails the alignment between the outlet aperture 34 of the dosing device 15 and the passage aperture 14 on the base plate 13, allowing the transit of the beans through them.

During use, the transporter member 35 is driven by means of the drive pin 24 in order to take, on each occasion, an empty sector 30 in alignment with the inlet aperture 32 to receive the beans and a full sector 30 in alignment with the outlet aperture 34 (fig. 10).

Preferably, the member 35 is rotated in the opposite direction to the direction in which the container 11 is rotated, in order to clamp the hopper 10. In the example of figs. 6 and 7, the container 11 is rotated in the clockwise direction F1 in order to clamp it in the housing compartment 20, while the transporter member 35 is rotated in the counterclockwise direction F2.

In this way, when the container 11 is rotated in the unclamping direction F3 in order to remove the hopper 10, the full sector 30, adjacent to the last sector 30 just emptied, is moved away from the outlet aperture 34, so as to prevent accidental escapes of the beans which could remain stuck between it and the passage aperture 14, making the closure ineffective.

According to the embodiments described with reference to figs. 9 and 10, the housing compartment 20 can comprise a bottom wall 56 from which the peg 26 extends and in which there is provided an inlet 58 of a transit channel 59 for the beans. The housing compartment 20 can comprise a covering door 60 suitable to selectively close the channel 59 when no hopper 10 is inserted.

The door 60 can comprise first engagement members 61 suitable to engage with corresponding second engagement members 62 present on the container 11 in a manner such that a rotation of the latter in the compartment 20 entails a simultaneous movement of the door 60 in order to open or close the inlet 58 to the channel 59.

The first engagement members 61 can comprise a protruding portion 74 suitable to slide in a guide slot 63 made through in the bottom wall 56, and the second engagement members 62 can comprise a seating 75 suitable to receive the protruding portion 74, for example made in at least one fin 53.

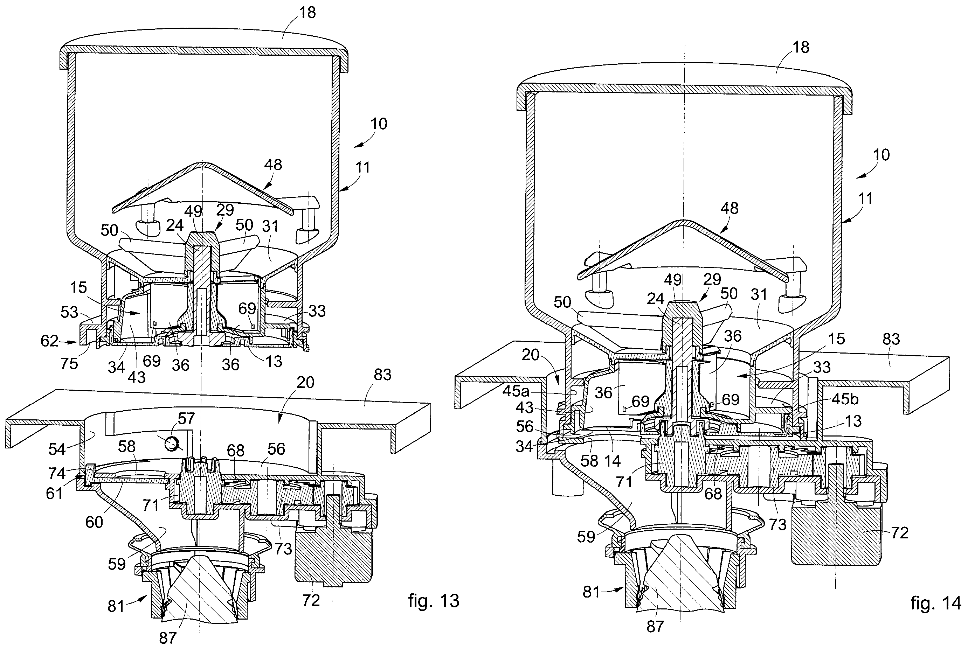

When the container 11 is rotated toward an open condition, the door 60 also rotates until a through hole 64, or a recess 164 made in it, aligns with the inlet 58 (figs. 11-14). When the container 11 is rotated toward a closed condition, a solid portion 60a of the door 60 is positioned below the inlet 58.

The selective opening and closing of the channel 59 therefore occurs by manually rotating the container 11 in one direction or the other.

According to some embodiments, elastic interference means can be associated with the door 60, which are configured to keep the door 60 in the closed or open position, preventing an accidental movement thereof. The interference means can comprise elastic elements 65, for example a spring, associated with a pin 66 which interacts with respective recesses 67 present in the door 60 and causes an interference to the sliding in correspondence with the open and closed positions.

The interference means 65, 66 are configured to cooperate axially with the recesses 67, in a direction substantially parallel to the axis of rotation X.

When the elastic means 65 thrust the pin 66 inside a recess 67, the protruding portion 74 is in turn kept thrust against the seating 75 of the fin 53 present on the container 11, thus helping to also keep the hopper 10 stationary in a stable position.

Drive means 70 are provided in the compartment 20, for example comprising a drive shaft 71 connected to a drive member 72, which are suitable to engage with the connection members 47 of the drive pin 24 in order to make it rotate. The drive shaft 71 and the drive member 72 can be connected to each other directly or by means of one or more intermediate gears and transmission members 73.

At least one detection device 68 can be provided in the compartment 20, or below it, for example a sensor of the magnetic type, configured to cooperate with identifying elements 69 associated with the sectors 30, for example magnets disposed on each of the blades 36, 136.

Returning to the machine 80, this also comprises, in a known way, a grinding device 81, a brewing unit 82 and a containing body 83 in which the housing compartment 20 is provided.

The machine 80 can comprise a user interface 84 able to receive a command for preparing a beverage and a control unit 85 configured to determine, on each occasion, the quantity of coffee powder necessary to prepare the required beverage and to command the drive means 70 in order to drive the dosing device 15 and supply the grinding device 81 only with the necessary quantity of beans.

The dosing of the beans occurs as described below. The drive member 72 is made to rotate at a known and constant speed by making the drive pin 24 and therefore the transporter member 35 and, if present, the conveyor member 29 rotate.

The grains fall by gravity through the inlet aperture 32 and, on each occasion, fill the sector 30 aligned with it. By means of the rotation of the transporter member 35 the beans are then transported toward the outlet aperture 34 and through the latter and the passage aperture 14 they fall by gravity into the channel 59 for transit toward the grinding device 81, where they are ground by the grinders 87 obtaining coffee powder with a desired granulometry.

According to some embodiments, the grinding device 81 can be programmed or commanded by the control unit 85 to grind the whole quantity of beans fed into it so that no beans remain inside it. To guarantee that the grinding device 81 is emptied completely, this is kept in operation for an extra amount of time, for example equal to about 2 sec.

In order to determine when to stop the grinding device 81, it can be provided to make a comparison between the difference in electrical absorption of the motor 72 or the difference in the speed of the rotation of the motor 72 or of the grinders 87, for example detected by means of suitable sensors, not shown.

For example, considering four sectors 30, each of about 90° and each suitable to contain 5cc of volume corresponding to about 2gr of coffee, depending on the beverage, the dosing device 15 can be driven according to the table below:

| Type of beverage | Grams required | N. of rotations |
|---|---|---|
| Extra light coffee | 4g | Rotation of 90° 2 times |
| Light coffee | 6g | Rotation of 90° 3 times |
| Normal coffee | 8g | Rotation of 90° 4 times |
| Strong coffee | 10g | Rotation of 90° 5 times |
| Extra strong coffee | 12g | Rotation of 90° 6 times |

The amount of rotation and the stop position of the sectors 30 and of the transporter member 35 are managed by the control unit 85, possibly on the basis of the data received from the detection device 68, so as to perform on each occasion the correct number of rotations to supply the necessary amount of coffee.

In the case of a transporter member 35 with four blades 36, 136, the control unit 85 can therefore accurately manage portions of rotation equal to 1/4 of a revolution, each corresponding to one sector 30.

In general, it can be provided that each sector 30 has a volume comprised between 3 and 8cc, preferably between 4 and 6cc.

Since the beans, in particular coffee beans, can also have a volume and a specific weight that vary greatly, both within the same origin type and also within a blend of beans of different origin, the machine 80 can comprise detection sensors 88 configured to detect the quantity of powder actually fed to the brewing unit 82. In this case, the method according to the invention can provide to compact the coffee powder fed into a chamber 86 of the brewing unit 82 with a defined pressure, measure the height H of the coffee mound obtained by means of the detection sensors 88 and compare it with a pre-stored expected value to verify whether the quantity of coffee powder fed to the brewing unit 82 corresponds to the quantity required for the selected beverage.

In the event that the quantity of coffee powder in the brewing unit 82 does not correspond to the required quantity, the control unit 85 can perform a feedback adjustment to adjust the number of rotations to be made in order to prepare a subsequent beverage.

It can also be provided that the control unit 85 adjusts the number of rotations of the dosing device 15 as a function of the type of coffee beans to be used. For example, the control unit 85 can receive, through the user interface 84, indications regarding the type of coffee beans to be used and determine the number of rotations on the basis of data and predefined tables that correlate the volume to the weight for a given type of coffee beans, which can be stored in a storage unit or accessed remotely.

It is clear that modifications and/or additions of parts may be made to the hopper 10, to the machine 80 and to the method for preparing a beverage as described heretofore, without departing from the field and scope of the present invention, as defined by the claims.

It is also clear that, although the present invention has been described with reference to some specific examples, a person of skill in the art shall certainly be able to achieve many other equivalent forms of hopper 10, machine 80 and method for preparing a beverage, having the characteristics as set forth in the claims and hence all coming within the field of protection defined thereby.

In the following claims, the sole purpose of the references in brackets is to facilitate reading and they must not be considered as factors that restrict the field of protection defined in the same claims.

## Claims

1. Hopper (10) for feeding predefined doses of beans, comprising a container (11) for beans provided with a lower aperture (12) with which there is associated a closing base plate (13) provided with a passage aperture (14) and disposed rotatable with respect to said container (11) in order to selectively open and close an outlet aperture (34) of a dosing device (15) disposed inside said container (11), wherein said dosing device (15) comprises a lower plate (33) provided with said outlet aperture (34) which, in an open position, aligns with said passage aperture (14), an upper plate (31) provided with an inlet aperture (32) and a transporter member (35) disposed between said upper plate (31) and said lower plate (33) and comprising at least two rotatable blades (36; 136), which define at least two sectors (30) with said plates (31, 33), said two sectors (30) having a pre-defined volume and being suitable to each contain a defined dose of beans, said transporter member (35) being able to be driven in order to rotate said sectors (30) with respect to an axis of rotation (X) so as to selectively take one of them in correspondence with said outlet aperture (34).

2. Hopper (10) as in claim 1, **characterized in that** said inlet (32) and outlet (34) apertures are disposed angularly offset from each other by an angle larger than the size of said sectors (30), and are in fixed positions with respect to each other and with respect to said container (11).

3. Hopper (10) as in claim 1 or 2, **characterized in that** it comprises a conveyor member (29) rotatable around said axis of rotation (X) and configured to cooperate with said upper plate (31) and convey the beans toward said inlet aperture (32), wherein said conveyor member (29) and said transporter member (35) are keyed on a same drive pin (24) which is provided with connection members (47) made through in said base plate (13).

4. Hopper (10) as in claim 3, **characterized in that** the blades (36; 136; 50) of at least one of either said transporter member (35) or said conveyor member (29) comprise at least one flexible portion (137; 151) made of rubber, silicone, or other flexible, deformable or pliable elastic material.

5. Hopper (10) as in any claim hereinbefore, **characterized in that** said sectors (30) are associated with respective identifying elements (69).

6. Machine (80) for preparing coffee beverages comprising a grinding device (81) for grinding beans and a brewing unit (82), **characterized in that** it comprises a removable hopper (10) as in any claim from 1 to 5, a housing compartment (20) provided with coupling and clamping means (26, 51) configured to cooperate with said container (11) and said base plate (13) in order to clamp said hopper (10) and open said outlet aperture (34), and with drive means (70) configured to drive said dosing device (15), and a control unit (85) configured to receive a beverage selection command and to command said drive means (70) to rotate said sectors (30) and supply to said grinding device (81) only the quantity of beans necessary and sufficient to prepare said selected beverage.

7. Machine (80) as in claim 6, **characterized in that** said housing compartment (20) comprises a covering door (60) suitable to selectively close a transit channel (59) for said beans toward said grinding device (81) when no hopper (10) is inserted, wherein said door (60) comprises first engagement members (61) suitable to engage with corresponding second engagement members (62) present on said container (11) in a manner such that a rotation of the latter in one direction or the other entails a simultaneous movement of said door (60) between an open condition and a closed condition.

8. Machine (80) as in claim 7, **characterized in that** elastic interference means (65, 66) are disposed in said housing compartment (20), which are configured to cooperate axially with interference members (67) provided on said door (60) to keep said door (60) and said container (11) engaged therewith stationary in a stable position, preventing an accidental movement thereof.

9. Machine (80) as in any claim from 6 to 8, **characterized in that** it comprises at least one detection device (68) configured to cooperate with identifying elements (69) provided on said dosing device (15) to determine the position of said sectors (30) and supply the detected data to said control unit (85), which commands said drive means (70).

10. Method for preparing a beverage, which provides to:
- insert, into a housing compartment (20) of a machine (80), a removable hopper (10) comprising a container (11), a dosing device (15) inside said container (11), and a closing base plate (13), wherein said dosing device (15) comprises a lower plate (33) provided with an outlet aperture (34), an upper plate (31) provided with an inlet aperture (32), and a transporter member (35) disposed between said upper plate (31) and said lower plate (33) and comprising at least two rotatable blades (36; 136), which define at least two sectors (30) with said plates (31, 33), said sectors (30) having a pre-defined volume and being suitable to each contain a defined dose of beans;
- rotate said container (11) to clamp said hopper (10) in said housing compartment (20) and align a passage aperture (14) of said base plate (13) with said outlet aperture (34);
- receive a command for the preparation of a beverage and determine a quantity of beans necessary and sufficient to prepare said selected beverage;
- drive said transporter member (35) to rotate said sectors (30) around an axis of rotation (X) and selectively take one of said sectors (30) in correspondence with said outlet aperture (34) until said determinate quantity of beans is supplied to a grinding device (81);
- drive said grinding device (81) to completely grind said quantity of beans and obtain a powder to be fed to a brewing unit (82);
- subject said powder to brewing and deliver the beverage.

11. Method as in claim 10, **characterized in that** together with said transporter member (35) it also provides to drive a conveyor member (29) cooperating with said upper plate (31) to convey the beans present in said container (11) toward said inlet aperture (32).

12. Method as in claim 10 or 11, **characterized in that** the amount of rotation and the stop position of said sectors (30) are managed by a control unit (85) on the basis of data received from a detection device (68) disposed in said housing compartment (20) and cooperating with identifying elements (69) provided on said dosing device (15) to determine the position of said sectors (30).

13. Method as in any claim from 10 to 12, **characterized in that** it provides to rotate said sectors (30) in the opposite direction to the direction in which said container (11) is rotated in order to clamp said hopper (10) so that when said container (11) is rotated in an unclamping direction, the full sector (30) adjacent to the last sector (30) just emptied is moved away from said outlet aperture (34) preventing accidental escapes of said beans.

14. Method as in any claim from 10 to 13, **characterized in that** the rotation of said container (11) in said housing compartment (20) entails a simultaneous movement of a door (60) covering said housing compartment (20) to selectively open and close a channel (59) for the transit of the beans toward said grinding device (81).

15. Method as in any claim from 10 to 14, **characterized in that** it provides to verify whether the quantity of powder fed to said brewing unit (82) corresponds to the quantity required for said selected beverage and possibly correct the amount of rotation of said sectors (30) in a subsequent preparation of a new beverage.

## Patentansprüche

1. Trichter (10) zum Zuführen vordefinierter Bohnenmengen, umfassend einen Behälter (11) für Bohnen, der mit einer unteren Öffnung (12) versehen ist, die mit einer verschließenden Grundplatte (13) verbunden ist, die mit einer Durchgangsöffnung (14) versehen und in Bezug auf den Behälter (11) drehbar angeordnet ist, um eine Auslassöffnung (34) einer innerhalb des Behälters (11) angeordneten Dosiervorrichtung (15) selektiv zu öffnen und zu schließen, wobei die Dosiervorrichtung (15) umfasst: eine untere Platte (33), die mit der Auslassöffnung (34) versehen ist, die, in einer offenen Stellung, mit der Durchgangsöffnung (14) fluchtet, eine obere Platte (31), die mit einer Einlassöffnung (32) versehen ist, und ein Transportelement (35), das zwischen der oberen Platte (31) und der unteren Platte (33) angeordnet ist und mindestens zwei drehbare Flügel (36; 136) umfasst, die mit den Platten (31, 33) mindestens zwei Sektoren (30) definieren, wobei die beiden Sektoren (30) ein vorbestimmtes Volumen haben und geeignet sind, jeweils eine bestimmte Portion von Bohnen zu enthalten, wobei das Transportelement (35) angetrieben werden kann, um die Sektoren (30) in Bezug auf eine Drehachse (X) zu drehen, um selektiv einen von ihnen in Übereinstimmung mit der Auslassöffnung (34) zu bringen.

2. Trichter (10) nach Anspruch 1, **dadurch gekennzeichnet, dass** die Einlassöffnung (32) und die Auslassöffnung (34) in einem Winkel zueinander angeordnet sind, der größer ist als die Größe der Sektoren (30), und sie sich in festgelegten Positionen zueinander und in Bezug auf den Behälter (11) befinden.

3. Trichter (10) nach Anspruch 1 oder 2, **dadurch gekennzeichnet, dass** er ein Förderelement (29) umfasst, das um die Drehachse (X) drehbar ist und so konfiguriert ist, dass es mit der oberen Platte (31) zusammenwirkt und die Bohnen in Richtung der Einlassöffnung (32) befördert, wobei das Förderelement (29) und das Transportelement (35) auf einem gleichen Antriebsstift (24) verkeilt sind, der mit Verbindungselementen (47) versehen ist, die durch die Grundplatte (13) hindurchgeführt sind.

4. Trichter (10) nach Anspruch 3, **dadurch gekennzeichnet, dass** die Flügel (36; 136; 50) von mindestens einem von entweder dem Transportelement (35) oder dem Förderelement (29) mindestens einen flexiblen Abschnitt (137; 151) aus Gummi, Silikon oder einem anderen flexiblen, verformbaren oder biegsamen elastischen Material umfassen.

5. Trichter (10) nach einem der vorhergehenden Ansprüche, **dadurch gekennzeichnet, dass** die Sektoren (30) mit entsprechenden Identifizierungselementen (69) verbunden sind.

6. Maschine (80) zur Zubereitung von Kaffeegetränken umfassend eine Mahlvorrichtung (81) zum Mahlen von Bohnen und eine Brüheinheit (82), **dadurch gekennzeichnet, dass** sie umfasst: einen abnehmbaren Trichter (10) nach irgendeinem der Ansprüche 1 bis 5, ein Gehäusefach (20), das mit Kupplungs- und Klemmmitteln (26, 51) versehen ist, die so konfiguriert sind, dass sie mit dem Behälter (11) und der Grundplatte (13) zusammenwirken, um den Trichter (10) festzuklemmen und die Auslassöffnung (34) zu öffnen, und mit Antriebsmitteln (70) versehen ist, die so konfiguriert sind, dass sie die Dosiervorrichtung (15) antreiben, und eine Steuereinheit (85), die so konfiguriert ist, dass sie einen Getränkeauswahlbefehl empfängt und den Antriebsmitteln (70) befiehlt, die Sektoren (30) zu drehen und der Mahlvorrichtung (81) nur die Menge an Bohnen zuzuführen, die notwendig und ausreichend ist, um das gewählte Getränk zuzubereiten.

7. Maschine (80) nach Anspruch 6, **dadurch gekennzeichnet, dass** das Gehäusefach (20) eine abdeckende Tür (60) umfasst, die geeignet ist, einen Durchgangskanal (59) für die Bohnen in Richtung der Mahlvorrichtung (81) selektiv zu schließen, wenn kein Trichter (10) eingesetzt ist, wobei die Tür (60) erste Eingriffselemente (61) umfasst, die geeignet sind, mit entsprechenden zweiten Eingriffselementen (62), die an dem Behälter (11) vorliegen, in Eingriff zu kommen, so dass eine Drehung des letzteren in die eine oder andere Richtung eine gleichzeitige Bewegung der Tür (60) zwischen einem offenen Zustand und einem geschlossenen Zustand zur Folge hat.

8. Maschine (80) nach Anspruch 7, **dadurch gekennzeichnet, dass** elastische Eingriffsmittel (65, 66) in dem Gehäusefach (20) angeordnet sind, die so konfiguriert sind, dass sie axial mit Eingriffselementen (67) zusammenwirken, die an der Tür (60) vorgesehen sind, um die Tür (60) und den mit ihr in Eingriff stehenden Behälter (11) stationär in einer stabilen Position zu halten und eine unbeabsichtigte Bewegung derselben zu verhindern.

9. Maschine (80) nach einem der Ansprüche 6 bis 8, **dadurch gekennzeichnet, dass** sie mindestens eine Erfassungsvorrichtung (68) umfasst, die so konfiguriert ist, dass sie mit Identifizierungselementen (69) zusammenarbeitet, die an der Dosiervorrichtung (15) vorgesehen sind, um die Position der Sektoren (30) zu bestimmen und die erfassten Daten an die Steuereinheit (85) zu liefern, die die Antriebsmittel (70) steuert.

10. Verfahren zur Zubereitung eines Getränks, welches vorsieht:
- Einsetzen eines herausnehmbaren Trichters (10), welcher einen Behälter (11), eine Dosiervorrichtung (15) im Inneren des Behälters (11) und eine verschließende Grundplatte (13) umfasst, in ein Gehäusefach (20) einer Maschine (80), wobei die Dosiervorrichtung (15) umfasst: eine untere Platte (33), die mit einer Auslassöffnung (34) versehen ist, eine obere Platte (31), die mit einer Einlassöffnung (32) versehen ist, und ein Transportelement (35), das zwischen der oberen Platte (31) und der unteren Platte (33) angeordnet ist und mindestens zwei drehbare Flügel (36; 136) umfasst, die mindestens zwei Sektoren (30) mit den Platten (31, 33) definieren, wobei die Sektoren (30) ein vordefiniertes Volumen haben und geeignet sind, jeweils eine definierte Portion von Bohnen zu enthalten;
- Drehen des Behälters (11), um den Trichter (10) in das Gehäusefach (20) zu klemmen und eine Durchgangsöffnung (14) der Grundplatte (13) mit der Auslassöffnung (34) auszurichten;
- Empfangen eines Befehls für die Zubereitung eines Getränks und Bestimmen einer Bohnenmenge, die notwendig und ausreichend ist, um das ausgewählte Getränk zuzubereiten;
- Antreiben des Transportelements (35), um die Sektoren (30) um eine Drehachse (X) zu drehen und selektiv einen der Sektoren (30) in Übereinstimmung mit der Auslassöffnung (34) zu bringen, bis die bestimmte Menge an Bohnen einer Mahlvorrichtung (81) zugeführt ist;
- Antreiben der Mahlvorrichtung (81), um die Bohnenmenge vollständig zu zermahlen und ein Pulver zu erhalten, das einer Brüheinheit (82) zugeführt wird;
- Unterziehen des Pulvers einem Brühvorgang und Ausgeben des Getränks.

11. Verfahren nach Anspruch 10, **dadurch gekennzeichnet, dass** es zusammen mit dem Transportelement (35) auch vorsieht, ein Förderelement (29) anzutreiben, das mit der oberen Platte (31) zusammenwirkt, um die in dem Behälter (11) vorhandenen Bohnen in Richtung der Einlassöffnung (32) zu befördern.

12. Verfahren nach Anspruch 10 oder 11, **dadurch gekennzeichnet, dass** das Ausmaß der Drehung und die Halteposition der Sektoren (30) von einer Steuereinheit (85) auf der Grundlage von Daten gesteuert werden, die von einer Erfassungsvorrichtung (68) empfangen werden, die in dem Gehäusefach (20) angeordnet ist und mit Identifikationselementen (69) zusammenwirkt, die an der Dosiervorrichtung (15) vorgesehen sind, um die Position der Sektoren (30) zu bestimmen.

13. Verfahren nach einem der Ansprüche 10 bis 12, **dadurch gekennzeichnet, dass** es vorsieht, die Sektoren (30) in die entgegengesetzte Richtung zu der Richtung zu drehen, in der der Behälter (11) gedreht wird, um den Trichter (10) einzuklemmen, so dass, wenn der Behälter (11) in eine Entriegelungsrichtung gedreht wird, der volle Sektor (30), der an den letzten gerade entleerten Sektor (30) angrenzt, von der Auslassöffnung (34) wegbewegt wird, wodurch ein unbeabsichtigtes Austreten der Bohnen verhindert wird.

14. Verfahren nach einem der Ansprüche 10 bis 13, **dadurch gekennzeichnet, dass** die Drehung des Behälters (11) in dem Gehäusefach (20) eine gleichzeitige Bewegung einer Tür (60), die das Gehäusefach (20) abdeckt, zur Folge hat, um einen Kanal (59) für den Durchgang der Bohnen zu der Mahlvorrichtung (81) selektiv zu öffnen und zu schließen.

15. Verfahren nach einem der Ansprüche 10 bis 14, **dadurch gekennzeichnet, dass** es vorsieht, zu überprüfen, ob die der Brüheinheit (82) zugeführte Pulvermenge der für das ausgewählte Getränk erforderlichen Menge entspricht, und möglicherweise das Ausmaß der Drehung der Sektoren (30) bei einer nachfolgenden Zubereitung eines neuen Getränks zu korrigieren.

## Revendications

1. Trémie (10) pour l'alimentation de doses prédéfinies de grains, comprenant un récipient (11) pour les grains muni d'une ouverture inférieure (12) à laquelle est associée une plaque de base de fermeture (13) munie d'une ouverture de passage (14) et disposée de manière rotative par rapport audit récipient (11) afin d'ouvrir et de fermer sélectivement une ouverture de sortie (34) d'un dispositif de dosage (15) disposé à l'intérieur dudit récipient (11), dans laquelle ledit dispositif de dosage (15) comprend une plaque inférieure (33) munie de ladite ouverture de sortie (34) qui, dans une position ouverte, s'aligne avec ladite ouverture de passage (14), une plaque supérieure (31) pourvue d'une ouverture d'entrée (32) et un élément de transport (35) disposé entre ladite plaque supérieure (31) et ladite plaque inférieure (33) et comprenant au moins deux lames rotatives (36 ; 136), qui définissent au moins deux secteurs (30) avec lesdites plaques (31, 33), lesdits deux secteurs (30) ayant un volume prédéfini et étant adaptés pour contenir chacun une dose définie de grains, ledit élément de transport (35) pouvant être entraîné afin de faire tourner lesdits secteurs (30) par rapport à un axe de rotation (X) de manière à prendre sélectivement l'un d'eux en correspondance avec ladite ouverture de sortie (34).

2. Trémie (10) selon la revendication 1, **caractérisée en ce que** lesdites ouvertures d'entrée (32) et de sortie (34) sont disposées de manière décalée angulairement l'une par rapport à l'autre d'un angle supérieur à la taille desdits secteurs (30), et sont dans des positions fixes l'une par rapport à l'autre et par rapport audit récipient (11).

3. Trémie (10) selon la revendication 1 ou 2, **caractérisée en ce qu'**elle comprend un élément de transport (29) pouvant tourner autour dudit axe de rotation (X) et configuré pour coopérer avec ladite plaque supérieure (31) et transporter les grains vers ladite ouverture d'entrée (32), dans laquelle ledit élément de transport (29) et ledit élément de transport (35) sont clavetés sur une même broche d'entraînement (24) qui est munie d'éléments de connexion (47) ménagés dans ladite plaque de base (13).

4. Trémie (10) selon la revendication 3, **caractérisée en ce que** les lames (36 ; 136 ; 50) d'au moins l'un dudit élément de transport (35) ou dudit élément de transport (29) comprennent au moins une partie flexible (137 ; 151) faite de caoutchouc, de silicone ou d'un autre matériau élastique flexible, déformable ou pliable.

5. Trémie (10) selon l'une quelconque des revendications précédentes, **caractérisée en ce que** lesdits secteurs (30) sont associés à des éléments d'identification respectifs (69).

6. Machine (80) pour préparer des boissons à base de café comprenant un dispositif de broyage (81) pour broyer des grains et une unité de percolation (82), **caractérisée en ce qu'**elle comprend une trémie amovible (10) selon l'une quelconque des revendications 1 à 5, un compartiment de logement (20) pourvu de moyens de couplage et de serrage (26, 51) configurés pour coopérer avec ledit récipient (11) et ladite plaque de base (13) afin de serrer ladite trémie (10) et d'ouvrir ladite ouverture de sortie (34), et de moyens d'entraînement (70) configurés pour entraîner ledit dispositif de dosage (15), et une unité de commande (85) configurée pour recevoir une commande de sélection de boisson et pour commander lesdits moyens d'entraînement (70) pour faire tourner lesdits secteurs (30) et fournir audit dispositif de broyage (81) uniquement la quantité de grains nécessaire et suffisante pour préparer ladite boisson sélectionnée.

7. Machine (80) selon la revendication 6, **caractérisée en ce que** ledit compartiment de logement (20) comprend une porte de couverture (60) appropriée pour fermer sélectivement un canal de transit (59) pour lesdits grains vers ledit dispositif de broyage (81) lorsqu'aucune trémie (10) n'est insérée, dans laquelle ladite porte (60) comprend des premiers éléments d'engagement (61) appropriés pour s'engager avec des seconds éléments d'engagement correspondants (62) présents sur ledit récipient (11) de manière à ce qu'une rotation de ces derniers dans un sens ou dans l'autre entraîne un mouvement simultané de ladite porte (60) entre un état ouvert et un état fermé.

8. Machine (80) selon la revendication 7, **caractérisée en ce que** des moyens d'interférence élastiques (65, 66) sont disposés dans ledit compartiment de logement (20), qui sont configurés pour coopérer axialement avec des éléments d'interférence (67) prévus sur ladite porte (60) pour maintenir ladite porte (60) et ledit récipient (11) engagé avec elle fixe dans une position stable, empêchant un mouvement accidentel de celle-ci.

9. Machine (80) selon l'une quelconque des revendications 6 à 8, **caractérisée en ce qu'**elle comprend au moins un dispositif de détection (68) configuré pour coopérer avec des éléments d'identification (69) prévus sur ledit dispositif de dosage (15) pour déterminer la position desdits secteurs (30) et fournir les données détectées à ladite unité de commande (85), qui commande lesdits moyens d'entraînement (70).

10. Procédé de préparation d'une boisson, qui permet de :
- insérer, dans un compartiment de logement (20) d'une machine (80), une trémie amovible (10) comprenant un récipient (11), un dispositif de dosage (15) à l'intérieur dudit récipient (11), et une plaque de base de fermeture (13), dans lequel ledit dispositif de dosage (15) comprend une plaque inférieure (33) munie d'une ouverture de sortie (34), une plaque supérieure (31) munie d'une ouverture d'entrée (32), et un élément de transport (35) disposé entre ladite plaque supérieure (31) et ladite plaque inférieure (33) et comprenant au moins deux lames rotatives (36 ; 136), qui définissent au moins deux secteurs (30) avec lesdites plaques (31, 33), lesdits secteurs (30) ayant un volume prédéfini et étant appropriés pour contenir chacun une dose définie de grains ;
- faire tourner ledit récipient (11) pour serrer ladite trémie (10) dans ledit compartiment de logement (20) et aligner une ouverture de passage (14) de ladite plaque de base (13) avec ladite ouverture de sortie (34) ;
- recevoir une commande pour la préparation d'une boisson et déterminer une quantité de grains nécessaire et suffisante pour préparer ladite boisson sélectionnée ;
- entraîner ledit élément de transport (35) pour faire tourner lesdits secteurs (30) autour d'un axe de rotation (X) et prendre sélectivement l'un desdits secteurs (30) en correspondance avec ladite ouverture de sortie (34) jusqu'à ce que ladite quantité déterminée de grains soit fournie à un dispositif de broyage (81) ;
- entraîner ledit dispositif de broyage (81) pour broyer complètement ladite quantité de grains et obtenir une poudre à alimenter dans une unité de percolation (82) ;
- soumettre ladite poudre à la percolation et livrer la boisson.

11. Procédé selon la revendication 10, **caractérisé en ce qu'**il prévoit également, avec ledit élément de transport (35), d'entraîner un élément de transport (29) coopérant avec ladite plaque supérieure (31) pour transporter les grains présents dans ledit récipient (11) vers ladite ouverture d'entrée (32).

12. Procédé selon la revendication 10 ou 11, **caractérisé en ce que** la quantité de rotation et la position d'arrêt desdits secteurs (30) sont gérées par une unité de commande (85) sur la base de données reçues d'un dispositif de détection (68) disposé dans ledit compartiment de logement (20) et coopérant avec des éléments d'identification (69) prévus sur ledit dispositif de dosage (15) pour déterminer la position desdits secteurs (30).

13. Procédé selon l'une quelconque des revendications 10 à 12, **caractérisé en ce qu'**il prévoit de faire tourner lesdits secteurs (30) dans le sens opposé au sens dans lequel ledit récipient (11) est tourné afin de serrer ladite trémie (10) de sorte que lorsque ledit récipient (11) est tourné dans un sens de desserrage, le secteur complet (30) adjacent au dernier secteur (30) qui vient d'être vidé est éloigné de ladite ouverture de sortie (34) empêchant les fuites accidentelles desdits grains.

14. Procédé selon l'une quelconque des revendications 10 à 13, **caractérisé en ce que** la rotation dudit récipient (11) dans ledit compartiment de logement (20) implique un mouvement simultané d'une porte (60) recouvrant ledit compartiment de logement (20) pour ouvrir et fermer sélectivement un canal (59) pour le transit des grains vers ledit dispositif de broyage (81).

15. Procédé selon l'une quelconque des revendications 10 à 14, **caractérisé en ce qu'**il prévoit de vérifier si la quantité de poudre alimentant ladite unité de percolation (82) correspond à la quantité requise pour ladite boisson sélectionnée et éventuellement de corriger la quantité de rotation desdits secteurs (30) dans une préparation ultérieure d'une nouvelle boisson.
